# EUROPÄISCHE PATENTSCHRIFT

(11) **EP 1 984 994 B1**
(45) Veröffentlichungstag und Bekanntmachung des Hinweises auf die Patenterteilung: **28.09.2011**
(21) Anmeldenummer: 06829679.7
(22) Anmeldetag: 16.12.2006
(51) Int. Cl.: H02G 11/00

(54) **Endklemme mit Stoßdämpfer für eine Schleppleitung**
Stop dog with buffer for a trailing cable
Butée d'arrêt avec amortisseur pour un treuil à câble

(30) Priorität: 08.02.2006 DE 102006005720
(43) Veröffentlichungstag der Anmeldung: 29.10.2008
(73) Patentinhaber: Conductix-Wampfler AG, 79576 Weil am Rhein-Märkt (DE)
(72) Erfinder: MAIER, Bernd, 79418 Schliengen (DE)
(74) Vertreter: Charrier, Rapp & Liebau
(86) Internationale Anmeldenummer: PCT/EP2006/012154
(87) Internationale Veröffentlichungsnummer: WO 2007/090454

(56) Entgegenhaltungen:
- EP-A- 1 008 798
- DE-B- 1 193 333

## Beschreibung

Die Erfindung betrifft eine Endklemme für eine Schleppleitung nach dem Oberbegriff des Anspruchs 1. Eine derartige Endklemme dient dazu, ein Ende einer Schleppleitung an einem Ende einer Tragschiene, entlang derer die Schleppleitung mittels mehrerer Laufwagen geschleppt werden kann, festzuhalten. Hierzu ist die Endklemme stationär an der Tragschiene montiert.

Im Zuge der Bewegung der Schleppleitung müssen zwischen den einzelnen Laufwagen beim Auseinanderfahren Zugkräfte und beim Zusammenfahren Druckkräfte übertragen werden, wobei die Beanspruchung schlagartig erfolgt und daher hohe Spitzenwerte der Kräfte auftreten, wenn nicht Gegenmaßnahmen ergriffen werden.

Eine konstruktiv einfache und wahrscheinlich kostengünstige Lösung lehrt die DE 32 36 992 A1. Hier werden zur Dämpfung schlagartiger mechanischer Beanspruchungen beim Auseinanderfahren der Laufwagen in den Zugseilen, durch welche die einzelnen Laufwagen miteinander gekoppelt sind, Dämpfungselemente in Form von Kettenstücken, die in eine Gummipackung einvulkanisiert sind, eingesetzt. Zur Dämpfung der durch Kollisionen zwischen Laufwagen beim Zusammenfahren bedingten Stöße sind Gummipuffer an den Stirnseiten der Laufwagen vorgesehen. Aufgrund der beweglichen Lagerung der Laufwagen an der Tragschiene haben solche einfachen Dämpfungselemente offenbar bereits eine ausreichende Wirksamkeit zur Dämpfung von Stößen.

Die Auslegeschrift DE 1 193 333 zeigt eine an der Stirnseite eines Laufwagens montierte Klemme für eine an längs einer Tragschiene bewegbaren Laufwagen gehalterte Schleppleitung, mit einer Auflage für die Schleppleitung und einer Vorrichtung zum Befestigen der Schleppleitung an der Auflage, wobei die Klemme einen Stoßdämpfer zum Dämpfen eines Anpralls eines anderen Laufwagens an der Klemme aufweist. Der Stoßdämpfer weist zwei Federkörper - einen Pufferkörper und eine Druckfeder - mit unterschiedlicher Charakteristik auf, die in der vorgesehenen Wirkrichtung des Stoßdämpfers hintereinander angeordnet sind, wobei die Gesamtcharakteristik des Stoßdämpfers nichtlinear ist.

Die Endklemme, welche ein Ende der Schleppleitung an einem Ende der Tragschiene festhält, ist jedoch stationär an der Tragschiene montiert und kann nicht durch eine eigene Bewegung nachgeben, wenn der erste Laufwagen bei einem Zurückfahren der Schleppleitung an ihr anschlägt. Deshalb muss an der Endklemme eine nachgiebigere Dämpfung für die durch das Anschlagen des ersten Laufwagens bedingten Stöße vorgesehen werden.

Der vorliegenden Erfindung liegt die Aufgabe zugrunde, für die Dämpfung des Anpralls des ersten Laufwagens einer Schleppleitung an deren Endklemme eine Lösung bereitzustellen, die sich durch eine bedarfsgerechte Wirksamkeit bei einfachem Aufbau auszeichnet.

Diese Aufgabe wird erfindungsgemäß durch eine Endklemme mit den Merkmalen des Anspruchs 1 gelöst. Vorteilhafte Weiterbildungen sind in den Unteransprüchen angegeben.

Erfindungsgemäß ist die Endklemme mit einem Stoßdämpfer ausgestattet, der mindestens zwei Federkörper mit unterschiedlicher Charakteristik aufweist, die in der vorgesehenen Wirkrichtung des Stoßdämpfers hintereinander angeordnet sind, wobei mindestens einer der Federkörper (20) aus einem elastischen Material mit zeilenförmiger Struktur besteht, und dass die Gesamtcharakteristik des Stoßdämpfers nichtlinear ist und einen Anfangsbereich mit geringer Zunahme der Federkraft über der Auslenkung und einen Folgebereich mit stärkerer Zunahme der Federkraft über der Auslenkung aufweist. Hierdurch ist eine Gesamtcharakteristik des Stoßdämpfers erzielbar, die optimal auf die Bedürfnisse der Anpralldämpfung am Ende einer Schleppleitung angepasst ist. Die Intensität eines Anpralls des ersten Laufwagens an die Endklemme kann nämlich in weiten Grenzen variieren, so dass für eine hohe Anprallintensität eine ausreichend harte Dämpfungscharakteristik benötigt wird, die aber bei einer niedrigen Anprallintensität kaum dämpfend wirken würde. Besonders geeignet für einen Federkörper von großer Nachgiebigkeit, wie er bei einer niedrigen Anprallintensität benötigt wird, ist hierbei elastisches Material mit zellenförmiger Struktur. Durch die Erfindung können die unterschiedlichen Anforderungen an die Dämpfungscharakteristik über den gesamten auftretenden Bereich der Anprallintensität erfüllt werden.

Besonders zweckmäßig ist es, einen nachgiebigen Federkörper an demjenigen Ende des Stoßdämpfers anzuordnen, das zur Einleitung einer Anprallkraft vorgesehen ist, damit dieser Federkörper bei einem Anprall geringer Intensität die Dämpfung im wesentlichen allein übernehmen kann, ohne dass andere Bauteile des Stoßdämpfers nennenswert ausgelenkt werden.

Eine vorteilhafte Lösung zur Kopplung der Federkörper unterschiedlicher Charakteristik ist deren Anordnung an verschiedenen Enden einer Hubstange, die unter der Einwirkung einer

Anprallkraft in der vorgesehenen Wirkrichtung des Stoßdämpfers verschiebbar ist. Dabei stützen steifere Federkörper die Hubstange an einem Gehäuse ab, das als Lager der Hubstange und als Träger der steiferen Federkörper fungiert. Besonders vorteilhaft ist es, wenn das Gehäuse zugleich einen Teil der Halterung zur Befestigung der Endklemme an der Tragschiene bildet.

Die Anordnung von mindestens zwei gleichartigen Federkörpern nebeneinander in dem Gehäuse, auf welche die wirksame Gesamtkraft zumindest annähernd gleichmäßig verteilt wird, erlaubt eine besonders kompakte Bauweise des Stoßdämpfers und eine stabile Führung seiner beweglichen Komponenten im Fall einer Auslenkung.

Nachfolgend wird ein Ausführungsbeispiel der Erfindung anhand der beigefügten Zeichnungen erläutert. In diesen zeigt
Fig. 1 eine schematische Darstellung eines Schleppleitungssystems,
Fig. 2 eine erfindungsgemäße Endklemme in drei Ansichten,
Fig. 3 vergrößerte Teilansichten des Stoßdämpfers der Endklemme von Fig. 2
Fig. 4 die Kennlinie eines der Federkörper des Stoßdämpfers von Fig. 3 und
Fig. 5 die Kennlinie des gesamten Stoßdämpfers von Fig. 3.

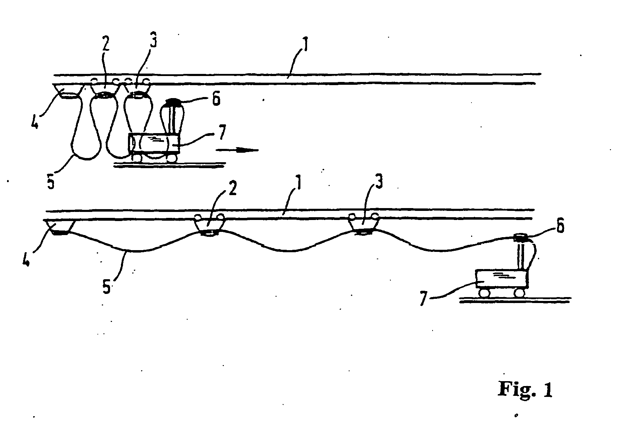

Wie in Fig. 1 schematisch dargestellt ist, sind bei einem Schleppleitungssystem an einer Tragschiene 1 mehrere bewegliche Laufwagen 2 und 3 geführt, wobei deren Anzahl im allgemeinen wesentlich größer als zwei ist. Abgehend von einer fest an einem Ende der Tragschiene 1 montierten Endklemme 4 sind eine oder mehrere Leitungen 5, beispielsweise elektrische Leitungen, über die Laufwagen 2 und 3 zu einer Leitungsklemme 6 eines beweglichen Arbeitsgeräts 7, beispielsweise eines Kranwagens, geführt. Da die Laufwagen 2 und 3 im Zuge ihrer dem Arbeitsgerät 7 folgenden Bewegungen entlang der Tragschiene 1 miteinander kollidieren können, sind sie mit in Fig. 1 nicht dargestellten Stoßdämpfern ausgestattet. Diese Stoßdämpfer brauchen nicht sehr nachgiebig ausgelegt zu sein, da die Laufwagen 2 und 3 bei einem Stoß auch durch ihre eigene Beweglichkeit nachgeben können. Dies gilt aber nicht für die Endklemme 4, die beim Zurückfahren der Schleppleitung in die in Fig. 1 oben gezeigte Ausgangsstellung durch den Anprall des ersten Laufwagens 2 zusammen mit diesem einer relativ großen Erschütterung ausgesetzt wäre und deshalb einen nachgiebigeren Stoßdämpfer benötigt als die beweglichen Laufwagen 2 und 3.

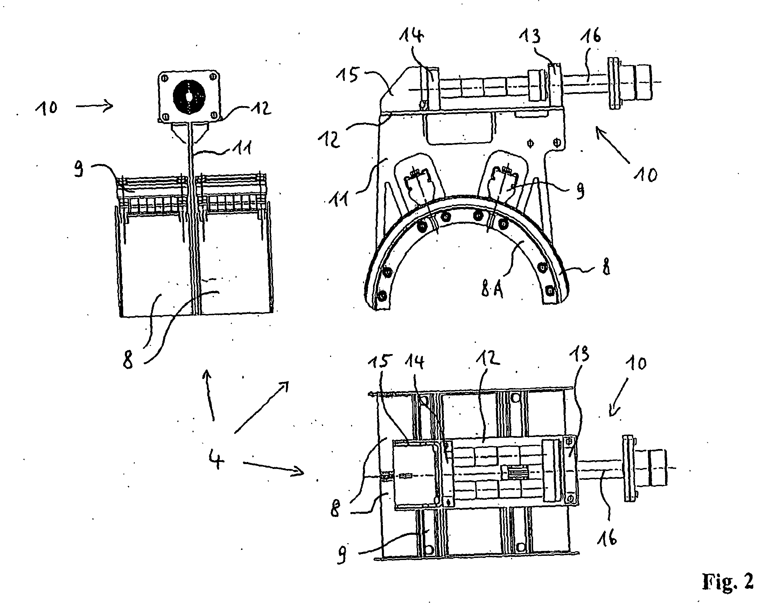

Eine erfindungsgemäße Endklemme 4 zeigt Fig. 2 in drei Ansichten, wobei rechts oben die Fig. 1 entsprechende Seitenansicht zu sehen ist, so dass sich die in Fig. 2 nicht gezeigte Schleppleitung in dieser Ansicht von der Endklemme 4 aus nach rechts erstrecken würde. Links daneben ist die Vorderansicht und rechts unten die Draufsicht zu sehen. Wie in der Seitenansicht am besten erkennbar ist, gehören zu der Endklemme 4 eine in dieser Ansicht im wesentlichen halbkreisförmige Auflage 8 für die Schleppleitung, Klemmvorrichtungen 9 zum Festklemmen der Schleppleitung an der Auflage 8 und ein Stoßdämpfer 10, der durch ein Tragblech 11 mit der Auflage 8 verbunden ist. Die Auflage 8 besteht aus zwei symmetrischen Teilen, die jeweils einen Flansch 8A aufweisen, an dem sie sowohl miteinander, als auch mit dem Tragblech 11 verschraubt sind.

An seinem oberen Ende ist an dem Tragblech 11 quer zu diesem eine Platte 12 befestigt, z.B. angeschweißt, die Bestandteil eines Gehäuses des Stoßdämpfers 10 ist, d.h. dessen Bodenplatte 12 bildet. Weitere wesentliche Bestandteile des Gehäuses des Stoßdämpfers 10 sind eine Vorderwand 13 und eine Rückwand 14. Die Rückwand wird durch einen Stützwinkel 15 abgestützt, der formschlüssig mit der Bodenplatte 12 verbunden, d.h. verhakt ist. Ferner umfasst das Gehäuse noch einen in Fig. 2 nicht gezeigten Deckel, der die übrigen drei Seiten abschließt. Das Gehäuse bildet außerdem einen Teil einer Halterung, mit der die Endklemme 4 an der Tragschiene 1 befestigt werden kann, indem es dazu vorgerichtet ist, mit einem Bauteil verbunden zu werden, welches seinerseits direkt mit der Tragschiene 1 verbindbar ist. Ein solches Bauteil kann insbesondere so geformt sein, dass es das Gehäuse teilweise umgreift, an der Unterseite der Bodenplatte 12 anliegt, und durch miteinander fluchtende Bohrungen mit dieser verbindbar ist.

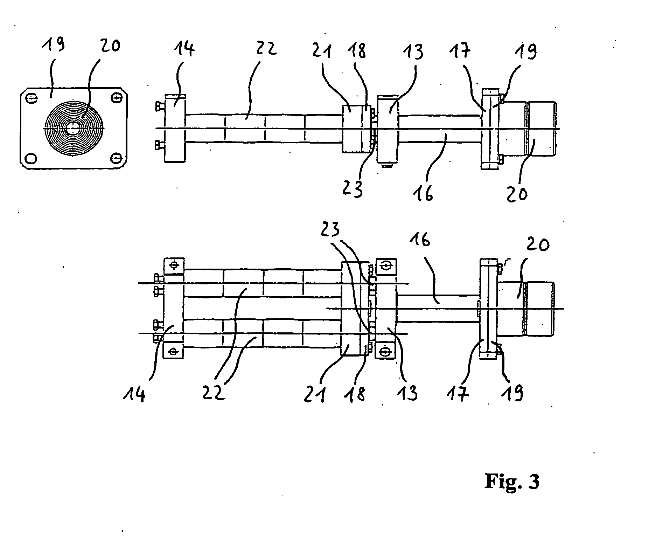

Die Bestandteile des Stoßdämpfers 10 sind in Fig. 3 ohne die Bodenplatte 12 und den auch bereits in Fig.2 nicht sichtbaren Deckel vergrößert dargestellt. Zu diesen Bestandteilen gehört eine bewegliche Hubstange 16, die sich in ihrer Ruhestellung überwiegend außerhalb des Gehäuses befindet, jedoch durch die Vorderwand 13 in dieses hineinragt. An ihrem in Bezug auf das Gehäuse äußeren Ende ist an der Hubstange 16 eine äußere Endplatte 17 befestigt, an ihrem diesbezüglich inneren Ende eine innere Endplatte 18.

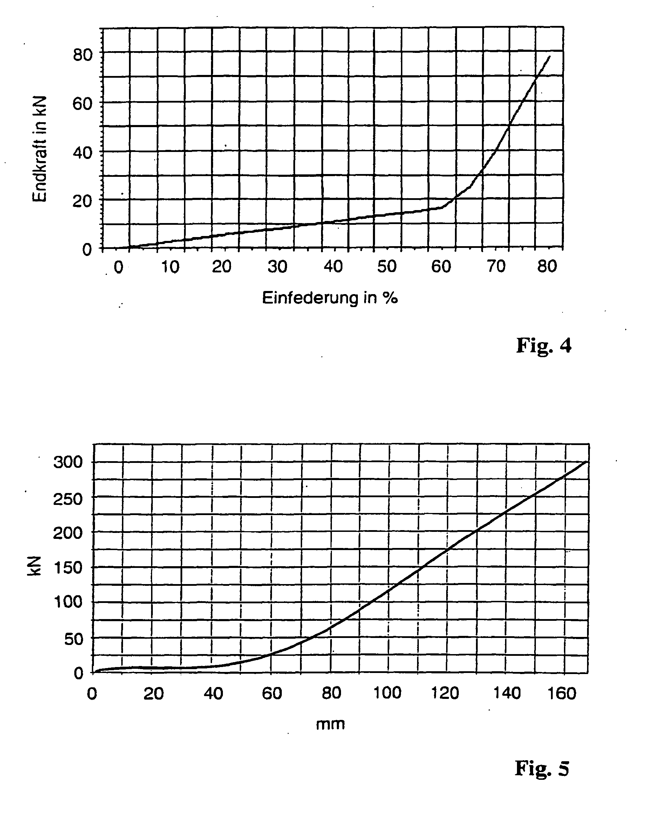

An der äußeren Endplatte 17 ist mittels einer Verbindungsplatte 19 ein nachgiebiger Federkörper 20 befestigt, der aus einem Kunststoff wie Polyurethan mit zellenförmiger Struktur besteht. Solche auch als Cellpuffer bekannten Federkörper 20 zeichnen sich durch eine hohe Kompressibilität bei nur geringer Querdehnung aus und sind als solche bekannt. Eine typische Kennlinie eines solchen Federkörpers 20 in Form eines Cellpuffers ist in Fig. 4 beispielhaft dargestellt. Sie ist dadurch gekennzeichnet, dass die Kraft über der relativen Kompression zunächst mit nur geringer Steigung ansteigt und diese Steigung erst bei einer beträchtlichen Kompression von in diesem Fall etwa zwei Dritteln der Länge nahezu abrupt auf einen wesentlich größeren Wert übergeht.

Die innere Endplatte 18 ist an einer Druckplatte 21 befestigt, die zwei nebeneinander angeordnete Reihen von untereinander gleichartigen, vergleichsweise steifen Federkörpern 22 zwischen sich und der Rückwand 14 des Gehäuses einklemmt. Diese steifen Federkörper 22 bestehen jeweils aus einem gummielastischen Vollmaterial mit im wesentlichen linearer Federkennlinie und haben die Form eines Hohlzylinders, was in den Figuren nicht sichtbar ist. Bei jeder der beiden Reihen sind mehrere solche Federkörper 22 hintereinander auf eine zwischen der Vorderwand 13 und der Rückwand 14 verlaufenden Führungsstange 23 gesteckt, wobei sie zusammen die Führungsstange 23 entlang des gesamten Abstandes zwischen der Druckplatte 21 und der Rückwand 14 umschließen. Die steifen Federkörper 22 stützen auf diese Weise die Hubstange 16 in deren Axialrichtung gegen die Rückwand 14 des Gehäuses des Stoßdämpfers 10 ab. Zur Umleitung einer aufgrund dieser Abstützung von den Federkörpern 22 auf die Rückwand 14 ausgeübten Kraft in die Bodenplatte 12 ist der Stützwinkel 15 vorgesehen.

Die Führungsstangen 23 sind an der Vorderwand 13 und an der Rückwand 14 des Gehäuses befestigt und durchragen die Druckplatte 21 und die innere Endplatte 18. Sie bilden im Zusammenwirken mit der Öffnung, an der die Hubstange 16 die Vorderwand 13 des Gehäuses durchragt, eine Führung für eine Bewegung der Hubstange 16 und der mit ihr fest verbundenen Komponenten, nämlich der Platten 17, 18, 19 und 21 sowie des Federkörpers 20, die im Fall einer ausreichend großen Kraftbeaufschlagung der Hubstange 16 in ihrer Axialrichtung, welche die Wirkrichtung des Stoßdämpfers 10 darstellt, entgegen der Stützkraft der Federkörper 22 einsetzt. Eine solche Bewegung der Hubstange 16 wird somit an drei verschiedenen Stellen geführt, was hohe Stabilität und Sicherheit gegen Verkanten gewährleistet.

Die hier nicht näher interessierenden Laufwagen 2 und 3 der Schleppleitung sind jeweils mit Stoßdämpfern einfacher Art, beispielsweise in Form von Gummipuffern, ausgestattet. Im betriebsfertig montierten Zustand der Schleppleitung fluchtet die Längsmittelachse der Hubstange 16 mit derjenigen der Stoßdämpfer der Laufwagen 2 und 3, so dass bei einem Anprall des ersten Laufwagens 2 an die Endklemme 4 beim Zurückfahren der Schleppleitung der der Endklemme 4 zugewandte Stoßdämpfer des ersten Laufwagens 2 in Axialrichtung der Hubstange 16 gegen den Federkörper 20 prallt.

Ist der Anprall nur von geringer Intensität, so nimmt aufgrund der vergleichsweise großen Stützkraft der Federkörper 22 sowie der Trägheit der Hubstange 16 und der mit ihr fest verbundenen Platten 17, 18, 19 und 21 im wesentlichen nur der nachgiebige Federkörper 20 die Anprallenergie auf und dämpft so die Erschütterung des ersten Laufwagens 2 und der Endklemme 4. Ist der Anprall aber von einer Intensität, welche die Energieabsorptionsfähigkeit des nachgiebigen Federkörpers 20 überschreitet, dann setzt nach einer maximalen Kompression des letzteren eine signifikante Auslenkung der Hubstange 16 gegen die Stützkraft der steifen Federkörper 22 ein, wobei diese Auslenkung wie zuvor beschrieben geführt wird. Die Auslenkung endet an einem gewissen Punkt und die Hubstange 16 wird von den Federkörpern 22 wieder bis in ihre in den Figuren 2 und 3 gezeigte Ausgangsstellung zurückgedrängt.

Durch die vorausgehend beschriebene Anordnung ergibt sich für den Stoßdämpfer 10 insgesamt eine Charakteristik der Kraft über der Auslenkung, wie sie in Fig. 5 beispielhaft dargestellt ist. Sie ist gekennzeichnet durch einen nichtlinearen Verlauf, der zunächst sehr flach beginnt und nach einer Auslenkung, die bereits einen signifikanten Anteil der vorgesehenen Maximalauslenkung ausmacht, in einen linearen Anstieg mit wesentlich stärkerer Steigung übergeht. Im gezeigten Beispiel findet der Übergang in Bereich von etwa einem Drittel der Maximalauslenkung statt. Dabei ist die Kraft in dem flachen Anfangsabschnitt der Kennlinie entgegen dem ersten Anschein von Fig. 5 nicht konstant, sondern sie steigt ebenfalls linear an, jedoch mit wesentlich geringerer Steigung als im Endabschnitt. Der flache Anfangsabschnitt in Fig. 5 entspricht nämlich maßgeblich dem Abschnitt geringer Steigung der Kennlinie von Fig. 4. Wenn die Elastizität des nachgiebigen Federkörpers 20 mit der Kennlinie von Fig. 4 ausgeschöpft ist und die Kraft weiter ansteigt, beginnt die lineare Kennlinie der steiferen Federkörper 22 den weiteren Verlauf zu dominieren, woraus sich der Übergang zu einem linearen Verlauf mit größerer Steigung ergibt.

Aus dem vorausgehend beschriebenen Ausführungsbeispiel ergeben sich für den Fachmann einige Abwandlungsmöglichkeiten der Erfindung. So kann beispielsweise die Gesamtcharakteristik des Stoßdämpfers 10 durch geeignete Auswahl von nachgiebigen und steifen Federkörpern 20 bzw. 22 und/oder durch Änderung der Anzahl der hintereinander angeordneten Federkörper 22 in weiten Grenzen variiert werden. Auch könnten bei Bedarf mehr als zwei Reihen von Federkörpern 22 nebeneinander und/oder mehr als zwei verschiedene Arten von Federkörpern in der Wirkungsrichtung des Stoßdämpfers 10 hintereinander angeordnet werden. Obgleich für die steiferen Federkörper 22 das zuvor erwähnte gummielastische Vollmaterial bevorzugt ist, wäre es auch denkbar, dafür andere elastische Elemente wie etwa Schraubenfedern aus Metall einzusetzen.

## Patentansprüche

1. An einer Tragschiene montierbare Endklemme für eine an längs einer Tragschiene bewegbaren Laufwagen gehalterte Schleppleitung, mit einer Auflage für die Schleppleitung und einer Klemmvorrichtung zum Festklemmen der Schleppleitung an der Auflage, **dadurch gekennzeichnet, dass** die Endklemme (4) einen Stoßdämpfer zum Dämpfen eines Anpralls des ersten Laufwagens (2) an der Endklemme (4) aufweist, dass der Stoßdämpfer (10) mindestens zwei Federkörper (20, 22) mit unterschiedlicher Charakteristik aufweist, die in der vorgesehenen Wirkrichtung des Stoßdämpfers (10) hintereinander angeordnet sind, dass die Gesamtcharakteristik des Stoßdämpfers (10) nichtlinear ist und einen Anfangsbereich mit geringer Zunahme der Federkraft über der Auslenkung und einen Folgebereich mit stärkerer Zunahme der Federkraft über der Auslenkung aufweist, und dass der nachgiebigste Federkörper (20) aus einem elastischen Material mit zellenförmiger Struktur besteht und am nächsten bei dem zur Einleitung einer Aufprallkraft vorgesehenen Ende des Stoßdämpfers (10) angeordnet ist.

2. Endklemme nach Anspruch 1, **dadurch gekennzeichnet, dass** der Stoßdämpfer (10) eine Hubstange (16) aufweist, die unter der Einwirkung einer Aufprallkraft in der vorgesehenen Wirkrichtung des Stoßdämpfers (10) verschiebbar ist, und dass an den beiden Enden der Hubstange (16) Federkörper (20, 22) mit voneinander unterschiedlicher Charakteristik angeordnet sind.

3. Endklemme nach Anspruch 2, **dadurch gekennzeichnet, dass** der Stoßdämpfer (10) ein Gehäuse aufweist in dem die Hubstange (16) beweglich gelagert ist, wobei sich ein inneres Ende der Hubstange (16) innerhalb und ein äußeres Ende außerhalb des Gehäuses befindet, dass der nachgiebigste Federkörper (20) an dem äußeren Ende der Hubstange (16) angeordnet ist, und dass das innere Ende der Hubstange (16) in dem Gehäuse an mindestens einem steiferen Federkörper (22) abgestützt ist.

4. Endklemme nach Anspruch 3, **dadurch gekennzeichnet, dass** zur Abstützung der Hubstange (16) in dem Gehäuse mindestens zwei gleichartige Federkörper (22) so nebeneinander angeordnet sind, dass sich die wirksame Gesamtkraft zumindest annähernd gleichmäßig auf diese Federkörper (22) verteilt.

5. Endklemme nach Anspruch 4, **dadurch gekennzeichnet, dass** das innere Ende der Hubstange (16) mit einer Platte (21) verbunden ist, die in dem Gehäuse in der vorgesehenen Wirkrichtung des Stoßdämpfers (10) verschiebbar gelagert ist und die Federkörper (22) in dem Gehäuse zwischen sich und einer Wand (14) des Gehäuses einklemmt.

6. Endklemme nach einem der Ansprüche 1 bis 5, **dadurch gekennzeichnet, dass** der Stoßdämpfer (10) ein Gehäuse aufweist, das einen Teil einer Halterung zur Befestigung der Endklemme (4) an der Tragschiene (1) bildet.

7. Endklemme nach einem der Ansprüche 1 bis 6, **dadurch gekennzeichnet, dass** mindestens einer der Federkörper (22) aus einem elastischen Vollmaterial besteht.

## Claims

1. Stop dog which can be mounted on a supporting rail for a trailing cable mounted on trolleys movable along a supporting rail, with a support for the trailing cable and a clamping device for securely clamping the trailing cable to the support, **characterised in that** the stop dog (4) exhibits a buffer for damping an impact of the first trolley (2) on the stop dog (4), **in that** the buffer (10) exhibits at least two spring elements (20, 22) with different characteristics which are arranged one behind another in the designed direction of action of the buffer (10), **in that** the overall characteristic of the buffer (10) is non-linear and exhibits a starting region with a slight increase in spring force over the deflection and a following region with a greater increase in spring force over the deflection, and **in that** the softest spring element (20) is made of an elastic material with a cellular structure and is arranged closest to the end of the buffer (10) designed for the introduction of an impact force.

2. Stop dog according to claim 1, **characterised in that** the buffer (10) exhibits a piston rod (16) which is displaceable under the influence of an impact force in the designed direction of action of the buffer (10), and **in that** spring elements (20, 22) with different characteristics are arranged at the two ends of the piston rod (16).

3. Stop dog according to claim 2, **characterised in that** the buffer (10) exhibits a housing in which the piston rod (16) is mounted movably, with an inner end of the piston rod (16) located inside and an outer end located outside the housing, **in that** the softest spring element (20) is arranged at the outer end of the piston rod (16), and **in that** the inner end of the piston rod (16) is supported in the housing on at least one stiffer spring element (22).

4. Stop dog according to claim 3, **characterised in that** at least two spring elements (22) of the same kind are arranged next to one another to support the piston rod (16) in the housing so that the effective overall force is distributed at least approximately uniformly between these spring elements (22).

5. Stop dog according to claim 4, **characterised in that** the inner end of the piston rod (16) is connected to a plate (21) which is mounted in the housing displaceable in the designed direction of action of the buffer (10) and clamps the spring elements (22) in the housing between itself and a wall (14) of the housing.

6. Stop dog according to one of claims 1 to 5, **characterised in that** the buffer (10) exhibits a housing which forms a part of a fixture for fastening the stop dog (4) on the supporting rail (1).

7. Stop dog according to one of claims 1 to 6, **characterised in that** at least one of the spring elements (22) is made of an elastic solid material.

## Revendications

1. Pince d'extrémité apte au montage sur un rail de support, destinée à une ligne de treuillage retenue sur des chariots mobiles pouvant être mus le long d'un rail de support, comprenant un appui dévolu à ladite ligne de treuillage et un dispositif de serrage conçu pour coincer fermement ladite ligne de treuillage contre ledit appui, **caractérisée par le fait que** la pince d'extrémité (4) présente un amortisseur destiné à amortir un impact du premier chariot mobile (2) contre ladite pince d'extrémité (4) ; **par le fait que** ledit amortisseur (10) comporte au moins deux corps élastiques (20, 22) dotés de caractéristiques différentes, agencés en succession dans la direction d'action prévue dudit amortisseur (10) ; **par le fait que** la caractéristique globale dudit amortisseur (10) est non linéaire et comprend une plage initiale à faible accroissement de la force élastique dans la zone de déviation, et une plage successive à accroissement plus accentué de la force élastique dans ladite zone de déviation ; et **par le fait que** le corps élastique (20) doué de souplesse maximale est constitué d'un matériau élastique à structure alvéolaire, et occupe la position la plus proche de l'extrémité dudit amortisseur (10) qui est prévue pour l'induction d'une force d'impact.

2. Pince d'extrémité selon la revendication 1, **caractérisée par le fait que** l'amortisseur (10) est muni d'un coulisseau (16) pouvant être déplacé dans la direction d'action prévue dudit amortisseur (10), sous l'effet d'une force d'impact ; et **par le fait que** des corps élastiques (20, 22), offrant des caractéristiques mutuellement différentes, sont disposés aux deux extrémités dudit coulisseau (16).

3. Pince d'extrémité selon la revendication 2, **caractérisée par le fait que** l'amortisseur (10) présente un carter dans lequel le coulisseau (16) est monté mobile, une extrémité interne et une extrémité externe dudit coulisseau (16) étant disposées, respectivement, à l'intérieur et à l'extérieur dudit carter ; **par le fait que** le corps élastique (20) doué de souplesse maximale est implanté sur l'extrémité externe dudit coulisseau (16) ; et **par le fait que** l'extrémité interne dudit coulisseau (16) prend appui, dans ledit carter, contre au moins un corps élastique (22) plus rigide.

4. Pince d'extrémité selon la revendication 3, **caractérisée par le fait qu'**au moins deux corps élastiques (22) de même type sont agencés en juxtaposition dans le carter, en vue de conférer un appui au coulisseau (16), de façon telle que la force totale opérante se répartisse, au moins approximativement, de manière uniforme sur ces corps élastiques (22).

5. Pince d'extrémité selon la revendication 4, **caractérisée par le fait que** l'extrémité interne du coulisseau (16) est reliée à une platine (21) qui est montée à coulissement dans le carter, dans la direction d'action prévue de l'amortisseur (10), et qui enserre les corps élastiques (22), dans le carter, entre elle-même et une paroi (14) dudit carter.

6. Pince d'extrémité selon l'une des revendications 1 à 5, **caractérisée par le fait que** l'amortisseur (10) présente un carter matérialisant une partie d'un système de retenue dédié à la fixation de ladite pince d'extrémité (4) au rail de support (1).

7. Pince d'extrémité selon l'une des revendications 1 à 6, **caractérisée par le fait qu'**au moins l'un des corps élastiques (22) est constitué d'un matériau élastique massif.
